# EUROPÄISCHE PATENTANMELDUNG

(11) **EP 4 813 838 A1**
(43) Veröffentlichungstag der Anmeldung: **30.09.2026**
(21) Anmeldenummer: 26162200.5
(22) Anmeldetag: 04.03.2026
(51) Int. Cl.: B64D 13/00, F16L 59/135, F16L 37/56, F16L 39/00, F16L 59/18, B64D 13/06, F16L 3/12, B64C 1/40

(54) **LEITUNGSSYSTEM FÜR EIN LUFTFÖRDERNDES SYSTEM IN EINEM FLUGZEUG**

(30) Priorität: 28.03.2025 DE 102025001085
(71) Anmelder: Airbus Operations GmbH, 21129 Hamburg (DE)
(72) Erfinder: Wiegand, Steffen, 21129 Hamburg (DE); Lux, Christian, 21129 Hamburg (DE)
(74) Vertreter: Schornack, Oliver

(57) **Zusammenfassung**

Die vorliegende Offenbarung betrifft ein Leitungssystem für ein luftförderndes System in einem Flugzeug, wobei das Leitungssystem eine Mehrzahl von Leitungen (110) und eine Stirnplatte (120) umfasst. die Stirnplatte verbindet die Mehrzahl von Leitungen so, dass sie mindestens paarweise aneinander anliegend angeordnet sind und miteinander verbunden sind. Die Mehrzahl von Leitungen sind zu dem aus einem biegesteifen und isolierenden Material hergestellt. Ferner betrifft die vorliegende Offenbarung ein luftförderndes System mit solch einem Leitungssystem sowie ein Flugzeug mit solch einem luftfördernden System.

## Beschreibung

Die vorliegende Offenbarung betrifft ein Leitungssystem für ein luftförderndes System in einem Flugzeug sowie ein luftförderndes System und ein Flugzeug. Insbesondere betrifft die vorliegende Offenbarung ein Leitungssystem für ein luftförderndes System zur Installation in einem Flugzeug, wobei Leitungen des Leitungssystems aus einem biegesteifen und isolierenden Material hergestellt sind und über eine Stirnplatte verfügen. Ferner betrifft die vorliegende Offenbarung ein luftförderndes System mit solch einem Leitungssystem sowie ein Flugzeug mit solch einem luftfördernden System.

Für gewöhnlich werden in einem Flugzeug Leitungen unterhalb eines Kabinenbodens installiert, zum Beispiel in einem sogenannten Dreiecksbereich zwischen Kabinenboden, Außenwand und einer vertikalen Strebe (Z-Strebe oder Z-strut), die den Kabinenboden auf einem Rahmen der Flugzeugstruktur abstützt (und üblicherweise die seitliche Begrenzung eines Gepäckbereichs des Flugzeugs begrenzt).

Die meisten Leitungen in diesem Dreiecksbereich werden an dem Kabinenboden und der vertikalen Strebe befestigt. Daher wird mit zunehmender Anzahl von zu verlegenden Leitungen der Einbauraum immer begrenzter und auch der Einbau an sich wird immer komplexer.

Es ist daher die Aufgabe der vorliegenden Erfindung die Leitungsinstallation in einem Flugzeug zu verbessern.

Diese Aufgabe wird durch die vorliegende Erfindung, wie sie durch die unabhängigen Ansprüche definiert ist, gelöst. Bevorzugte Ausführungsformen ergeben sich aus den abhängigen Ansprüchen.

Gemäß einem ersten Aspekt zum besseren Verständnis der vorliegenden Offenbarung umfasst ein Leitungssystem für ein luftförderndes System zur Installation in einem Flugzeug eine Mehrzahl von Leitungen, die parallel zueinander angeordnet sind. Jede der Mehrzahl von Leitungen ist zum Fördern (oder Transportieren oder Führen) von Luft oder einem anderen Fluid (Gas oder Flüssigkeit) geeignet und ausgelegt.

Ferner umfasst das Leitungssystem eine Stirnplatte, die an einem längsseitigen Ende der Mehrzahl von Leitungen angebracht ist. Zum Beispiel kann die Stirnplatte die Leitungen der Mehrzahl von Leitungen miteinander verbinden, sodass diese aneinander anliegend angeordnet sind. Mindestens zwei der Leitungen sind dabei so angeordnet, dass sie aneinander anliegen, also sich berühren. Mit anderen Worten bildet die Mehrzahl von Leitungen ein Leitungsbündel, wobei die Leitungen parallel zueinander angeordnet sind und mindestens paarweise aneinander anliegen.

Die Mehrzahl von Leitungen kann, in Querschnittsrichtung blickend, entlang einer Linie angeordnet sein (wobei es sich um eine gerade oder gekrümmte Linie handeln kann), oder kann zu einem Leitungsbündel miteinander verbunden sein (wobei eine Leitung auch mehr als zwei weitere Leitungen berühren kann). Die Stirnplatte weist eine entsprechende Form auf, sodass Öffnungen in der Stirnplatte, die jeweils mit einer der Leitungen übereinstimmen, innerhalb der Form der Stirnplatte angeordnet sind.

Eine solche Stirnplatte kann an jedem der längsseitigen Enden der Mehrzahl von Leitungen angeordnet sein. Die Mehrzahl von Leitungen kann somit ausschließlich durch die zwei Stirnplatten gehalten werden und ihre Lage zueinander bestimmt werden.

Die Stirnplatte ermöglicht einerseits eine Verringerung der Anzahl von Halterungen, da die Mehrzahl von Leitungen über die Stirnplatte befestigt werden können. Andererseits kann auf konventionelle Halterungen verzichtet werden, die üblicherweise an einer Außenseite (Umfangsseite) jeder Leitung vorgesehen sind. Dies erlaubt es, einen Abstand zwischen den Leitungen zu verringern, insbesondere sie aneinander anliegen zu lassen. Dadurch wird der Platz, den die Mehrzahl von Leitungen einnimmt verringert.

Jede der Mehrzahl von Leitungen ist aus einem biegesteifen, isolierenden Material hergestellt. Unter einem biegesteifen Material ist hier ein Material zu verstehen, dass es jeder Leitung der Mehrzahl von Leitungen ermöglicht, ohne übermäßige Verformung (Durchhängen) an ihren längsseitigen Enden befestigt zu werden. Das Material ist somit ein festes Material. Insbesondere handelt es sich bei dem biegesteifen Material nicht um ein Gewebe, welches nur zugfest ist, aber im nicht aufgeblasenen Zustand erschlafft.

Durch die isolierenden Eigenschaften des Materials, aus dem die einzelnen Leitungen der Mehrzahl von Leitungen gebildet sind, kann auf eine zusätzlich außenseitig angebrachte Isolierung verzichtet werden. Dadurch ist ein Wärmeübertrag in die Umgebung und insbesondere in die mindestens eine daran anliegende anderen Leitung eingeschränkt. Dies ermöglicht das aneinander Anliegen der Leitungen, und ferner ermöglicht es, dass sich die Luftströme in den einzelnen Leitungen thermisch nicht oder nur minimal beeinflussen.

Dadurch kann das Leitungssystem sehr kompakt gebaut werden, wodurch der Einbauraum für das Leitungssystem deutlich reduziert wird. Je nach Anzahl der Leitungen und Durchmesser ist hier eine Platzersparnis von ca. 15 % bis 25 % gegenüber konventionell verlegten und angebrachten Leitungen möglich.

In einer Implementierungsvariante kann die Stirnplatte mindestens einen Verbinder umfassen, der dazu eingerichtet ist, eine weitere Stirnplatte aufzunehmen. Zum Beispiel können die Stirnplatte und die weitere Stirnplatte deckungsgleich aufeinander liegend angeordnet werden und durch den Verbinder gehalten werden.

Lediglich als Beispiel kann der Verbinder ferner dazu eingerichtet sein, die weitere Stirnplatte formschlüssig und/oder kraftschlüssig zu halten. Mit anderen Worten kann die weitere Stirnplatte in den Verbinder geschoben oder gesteckt werden, wodurch sie fest in einer überlappenden Position mit der Stirnplatte der Mehrzahl von Leitungen angeordnet ist.

Die gegenseitige Anordnung der Stirnplatte und der weiteren Stirnplatte durch den Verbinder ermöglicht insbesondere, dass die Mehrzahl von Leitungen mit einer korrespondierenden Mehrzahl von Leitungen oder ähnlichen Luftleitungselementen fluidisch miteinander verbunden werden. Zum Beispiel kann jede der Mehrzahl von Leitungen bündig mit einer weiteren Leitung oder einem Luftleitungselement angeordnet werden, sodass eine durchgängige und vorsprungfreie Luftleitung entsteht.

In einer Implementierungsvariante kann der mindestens eine Verbinder mindestens abschnittsweise an einer Außenkante der Stirnplatte angeordnet sein. Der Verbinder kann somit aus mehreren Abschnitten bestehen. Durch die Anordnung an der Außenkante der Stirnplatte lässt sich in jeden der Abschnitte (in jeden der Verbinder) die weitere Stirnplatte einführen und durch diesen halten.

In einer Implementierungsvariante weist jeder Verbinder einen ersten Teil, der sich von der Stirnplatte aus weg erstreckt, sowie einen zweiten Teil, der sich von dem ersten Teil erstreckt, auf. Der zweite Teil kann zum Beispiel parallel zu und beabstandet von der Stirnplatte der Mehrzahl von Leitungen angeordnet sein. Dadurch lässt sich die weitere Stirnplatte zwischen dem zweiten Teil und der Stirnplatte der Mehrzahl von Leitungen einsetzen. Der erste Teil des Verbinders kann dabei als Anschlag für die weitere Stirnplatte dienen und eine korrekte Position relativ zu der den Verbinder umfassenden Stirnplatte einnehmen. Der Abstand zwischen dem zweiten Teil des Verbinders und der Stirnplatte kann so gewählt sein, dass er ungefähr der Dicke der weiteren Stirnplatte entspricht, sodass die weitere Stirnplatte in den Verbinder eingeführt werden kann, genauer gesagt zwischen den zweiten Teil des Verbinders und der Stirnplatte angeordnet und formschlüssig und/oder kraftschlüssig gehalten werden kann. Zum Beispiel kann der Abstand zwischen dem zweiten Teil und der den Verbinder umfassenden Stirnplatte gleich wie oder kleiner als die Dicke der weiteren Stirnplatte sein.

In einer Implementierungsvariante kann der zweite Teil des Verbinders eine Verdickung aufweisen, durch die ein Abstand zwischen dem zweiten Teil des Verbinders und der Stirnplatte geringer ist als in einem Bereich des zweiten Teils des Verbinders ohne die Verdickung. Durch die Verdickung kann der Abstand kleiner werden als die Dicke der weiteren Stirnplatte, sodass die Stirnplatte durch die Verdickung eingeklemmt wird (kraftschlüssig gehalten wird).

In einer Implementierungsvariante können zwei Enden des mindestens einen Verbinders in einem Abstand voneinander angeordnet sein, der kleiner ist als eine maximale Ausdehnung der weiteren Stirnplatte. Zum Beispiel sind bei einem einzelnen Verbinder nur zwei Enden (zum Beispiel am Umfang der Stirnplatte) vorhanden. Deren Abstand zueinander ist kleiner als die maximale Ausdehnung der weiteren Stirnplatte. Die beiden Enden des Verbinders bilden somit eine Öffnung, in die die weitere Stirnplatte eingeführt werden kann. Aufgrund des kleineren Abstands kann sich der Verbinder zum Beispiel elastisch verformen, um die Stirnplatte einführen zu können. Ferner verhindert der kleinere Abstand zwischen den beiden Enden des Verbinders, dass sich die weitere Stirnplatte von der den Verbinder umfassenden Stirnplatte löst (mit anderen Worten nicht herausfällt).

Im Fall eines Verbinders, der aus mehreren Abschnitten besteht, sind unter den zwei Enden des mindestens einen Verbinders jeweils ein Ende eines der mehreren Abschnitte gemeint, die am weitesten voneinander entfernt liegen. Diese beiden Enden bilden somit die oben beschriebene Öffnung zum Einführen und Halten der weiteren Stirnplatte.

In einer Implementierungsvariante kann das isolierende Material der Mehrzahl von Leitungen Hohlräume aufweisen. Die Hohlräume in dem Material können Gasbläschen, einen Schaum und/oder eine Wabenstruktur umfassen. Um eine Strömung im Inneren der Leitungen nicht zu beeinträchtigen, sind die Hohlräume vollständig von dem Material der Leitungen umschlossen, öffnen sich somit nicht in das Leitungsinnere.

In einer Implementierungsvariante kann die Wabenstruktur so aufgebaut sein, dass die Wabenwände in Radialrichtung der Leitung ausgerichtet sind. Mit anderen Worten verläuft die Längsrichtung des Hohlraums jeder Wabe in Radialrichtung der Leitung. Die Wabenlänge bestimmt hierbei maßgeblich die Dicke der Leitungswand. Ferner kann die Leitung eine Innenwand und/oder Außenwand aufweisen, sodass die einzelnen Waben auf mindestens einer Seite geschlossen sind. Die Leitung kann somit aus einem Sandwich-Material gefertigt werden. Solche Leitungen weisen eine hohe Stabilität auf, während der Hohlraum in den Waben eine thermische Isolierung bewirkt.

In einer Implementierungsvariante kann die Wabenstruktur so aufgebaut sein, dass die Wabenwände in Längsrichtung der Leitung ausgerichtet sind. Mit anderen Worten verläuft die Längsrichtung des Hohlraums jeder Wabe in Längsrichtung der Leitung. Dadurch lässt sich die Leitung zum Beispiel durch extrudieren leicht herstellen. Bei einem solchen Aufbau kann auf eine Innenwand und Außenwand verzichtet werden, da diese durch die Wabenwände gebildet werden.

Ferner kann in Radialrichtung der Leitung eine oder mehrere Waben angeordnet sein. Mit jeder "Lage" von Waben in Radialrichtung wird die Isolierwirkung erhöht, aber auch die Dicke der Leitungswand vergrößert.

In einer Implementierungsvariante kann die Mehrzahl von Leitungen aus einem Kunststoff bestehen. Beispielsweise kann die Mehrzahl von Leitungen aus einem faserverstärkten Kunststoff hergestellt werden. Dabei kann es sich um einen glasfaserverstärkten Kunststoff (GFK), carbonfaserverstärkten Kunststoff (CFK), oder einem Verbund aus GFK und CFK handeln. Ferner kann die Mehrzahl von Leitungen auch aus einem Schaum hergestellt werden.

Selbstverständlich können manche oder alle der Leitungen aus einem unterschiedlichen Material gefertigt sein als andere der Mehrzahl von Leitungen. Das Material jeder der Leitungen kann je nach zu transportierendem Medium ausgewählt werden. Lediglich als Beispiel kann gekühlte Luft, heiße Luft, Sauerstoff, Wasser, Abwasser oder ähnliches durch das Leitungssystem transportiert werden, wobei für jedes dieser Fluide ein anderes isolierendes Material optimal ist. Die Mehrzahl der Leitungen kann demnach aus dem (jeweils) optimalen Material hergestellt werden.

In einer Implementierungsvariante kann auch eine zusätzliche Halteplatte an einer beliebigen Stelle entlang der Leitungen angeordnet sein, wobei die zusätzliche Halteplatte eine gleiche Form aufweist, wie die Stirnplatte am längsseitigen Ende der Mehrzahl von Leitungen. Dies kann zum Beispiel bei langen Leitungen zusätzliche Stabilität für die Mehrzahl von Leitungen bringen, und insbesondere deren aneinander anliegende Position stützen. Mit anderen Worten ist die zusätzliche Halteplatte wie die Stirnplatte geformt, weist jedoch keinen Verbinder auf.

Lediglich als Beispiel kann die Stirnplatte eine Schelle oder eine Schablone darstellen. Bei der Schablone kann es sich um eine scheibenförmige Vorrichtung handeln, die Öffnungen aufweist, in die die Leitungen eingeführt oder eingelegt werden können, wobei die Anzahl der Öffnungen gleich oder größer der Anzahl von Leitungen in der Mehrzahl von Leitungen ist.

In einer Implementierungsvariante kann die Stirnplatte und/oder die zusätzliche Halteplatte mehrteilig sein, sodass sie an die Leitungen der Mehrzahl von Leitungen angelegt werden kann. Lediglich als Beispiel kann die Stirnplatte und/oder die zusätzliche Halteplatte ein erstes Bauteil und ein zweites Bauteil umfassen, die von zwei Seiten der Mehrzahl von Leitungen angelegt werden können und miteinander verbunden werden können.

In einer Implementierungsvariante kann das erste Bauteil und das zweite Bauteil des mehrteiligen Verbinders drehbar miteinander gekoppelt werden (zum Beispiel mittels eines Scharniers oder mittels Einhängen eines der Bauteile in das andere) und an einer gegenüberliegenden Stelle miteinander lösbar befestigt werden (zum Beispiel mittels Verschraubung, Klemme, Lasche oder Spannverschluss).

In einer Implementierungsvariante kann die Stirnplatte und/oder die zusätzliche Halteplatte mit der Mehrzahl von Leitungen integriert sein. Mit anderen Worten wird die Stirnplatte und/oder die zusätzliche Halteplatte als ein Bauteil (einstückig) mit der Mehrzahl von Leitungen hergestellt.

In einer Implementierungsvariante kann das Leitungssystem ferner eine Kopplungseinrichtung umfassen, die dazu eingerichtet ist, die Mehrzahl von Leitungen mit einer korrespondierenden Mehrzahl von Leitungen zu koppeln, zum Beispiel miteinander zu verbinden. Die Kopplungseinrichtung kann an einem Ende der Mehrzahl von Leitungen angeordnet sein und ist dazu eingerichtet, eine korrespondierende Mehrzahl von Leitungen miteinander fluidisch zu verbinden. Mit anderen Worten werden zwei Leitungspakete (ein Leitungspaket entspricht der Mehrzahl von Leitungen) in Längsrichtung miteinander verbunden, sodass ein insgesamt längeres Leitungspaket entsteht.

Vorzugsweise findet eine fluidischen Trennung zwischen aneinander liegend angeordneten Leitungen statt. Mit anderen Worten wird immer nur eine Leitung einer ersten Mehrzahl von Leitungen (erstes Leitungspaket) mit einer entsprechenden Leitung einer zweiten Mehrzahl von Leitungen (zweites Leitungspaket) fluidisch verbunden, bleibt aber von den übrigen Leitungen fluidisch getrennt. Eine fluidische Verbindung bedeutet, dass Luft (oder ein anderes Fluid) von einer Leitung in die korrespondierende andere Leitung in der entsprechenden Längsrichtung (weiter-) strömen kann. Die Kopplungseinrichtung ist in Radialrichtung hingegen luftdicht.

In einer Implementierungsvariante kann die Kopplungseinrichtung eine Mehrzahl von Rohrstücken umfassen.

In einer Implementierungsvariante kann jedes der Mehrzahl von Rohrstücken aus einem flexiblen Material hergestellt werden. Dadurch können Verformungen zwischen zwei Leitungspaketen in Axialrichtung sowie in Transversalrichtung und auch Verdrehungen bzw. Verkippungen zwischen den beiden Leitungspaketen kompensiert werden.

In einer Implementierungsvariante kann die Kopplungseinrichtung eine Stirnplatte umfassen, die einer weiteren Stirnplatte entspricht. Somit kann die weitere Stirnplatte der Kopplungseinrichtung in den mindestens einen Verbinder eingeführt werden bzw. in dem mindestens einen Verbinder aufgenommen werden, und somit mit der Stirnplatte der Mehrzahl von Leitungen verbunden werden.

In einer Implementierungsvariante kann die Stirnplatte der Mehrzahl von Leitungen und/oder die weitere Stirnplatte der Kopplungseinrichtung eine Dichtung aufweisen, die um eine Öffnung zugehörig zu einer der Leitungen von der Mehrzahl von Leitungen in der entsprechenden Stirnplatte angeordnet ist. Dadurch kann eine Flanschdichtung für die Mehrzahl von Leitungen erzielt werden, und es kann auf Dichtungen verzichtet werden, die in den Leitungsquerschnitt ragen.

Lediglich als Beispiel weist die Stirnplatte und/oder die weitere Stirnplatte der Kopplungseinrichtung eine Nut auf, die umlaufend um die entsprechende Öffnung vorgesehen ist, und in die die Dichtung eingelegt werden kann. Bei der Dichtung kann es sich zum Beispiel um einen O-Ring handeln.

In einer Implementierungsvariante kann eine Leitung einer entsprechenden Mehrzahl von Leitungen in eines der Rohrstücke der Kopplungseinrichtung eingeführt werden. So können zum Beispiel sich korrespondierende Leitungen von zwei Leitungspaketen im Inneren des jeweiligen Rohrstücks treffen. Das jeweilige Rohrstück bildet dabei eine Dichtung gegenüber den beiden korrespondierenden Leitungen.

In einer Implementierungsvariante kann die Kopplungseinrichtung auf beiden Seiten der Stirnplatte der Kopplungseinrichtung Rohrstücke aufweisen, wobei jedes Rohrstück in eine Leitung der Mehrzahl von Leitungen eingeführt werden kann. Mit anderen Worten wird die Leitung der Mehrzahl von Leitungen über eines der Rohrstücke gestülpt oder aufgesetzt. Dabei weist das Rohrstücks zwar einen kleineren Durchmesser auf als die entsprechende Leitung der Mehrzahl von Leitungen. Dafür ist das Befestigen der Leitung an die Kopplungseinrichtung einfacher, da es von außerhalb der Leitung erfolgen kann.

Die letzten beiden Implementierungsvariante ermöglichen eine Verbindung von Leitungspaketen ohne Verbinder an der Stirnplatte der Mehrzahl von Leitungen.

In einer Implementierungsvariante kann das Leitungssystem ferner eine Halterung umfassen, die dazu eingerichtet ist, die Stirnplatte und/oder die Kopplungseinrichtung zu halten. Dadurch kann die Stirnplatte und/oder die Kopplungseinrichtung auch zur Befestigung der Mehrzahl von Leitungen bzw. des ganzen Leitungssystems verwendet werden. Insbesondere wird der Einbau des Leitungssystems vereinfacht, da die Anzahl der notwendigen Halterungen für die Mehrzahl von Leitungen deutlich reduziert ist, im Vergleich zu herkömmlichen Befestigungen, bei denen jede einzelne Leitung mindestens eine Halterung benötigt.

In einer Implementierungsvariante kann die Halterung ferner dazu eingerichtet sein, an einem Strukturbauteil des Flugzeugs befestigt zu werden. Beispielsweise kann die Halterung Öffnungen, Clips, Bolzen oder ähnliches aufweisen, die zur Befestigung an dem Strukturbauteil des Flugzeugs geeignet sind.

In einer Implementierungsvariante können die mindestens paarweise aneinander anliegend angeordneten Leitungen aneinander befestigt sein. Diese Befestigung aneinander ist insbesondere in einem Bereich zwischen den längsseitigen Enden der Leitungen vorgesehen. Dadurch wird das Leitungssystem insgesamt stabiler (zum Beispiel steifer). Ferner kann die Stirnplatte und/oder die Kopplungseinrichtung und/oder die Halterung einfacher ausgestaltet werden, da die Mehrzahl von Leitungen bereits eine gewisse Stabilität mitbringt. Lediglich als Beispiel müssen die Stirnplatte und/oder die Kopplungseinrichtung und/oder die Halterung weniger Verformungen aufnehmen bzw. kompensieren, die zum Beispiel durch ein Durchhängen der Leitungen auftreten können.

In einer Implementierungsvariante können die paarweise aneinander anliegend angeordneten Leitungen aneinander geklebt oder miteinander verschweißt sein.

In einer Implementierungsvariante kann das Material der Mehrzahl von Leitungen eine Dicke zwischen 1 mm und 20 mm, vorzugsweise zwischen 2 mm und 8 mm, und besonders bevorzugt zwischen 3 mm und 4 mm aufweisen. Die Materialdicke (Materialstärke) der Leitungen in Radialrichtung kann abhängig von statischen Bedingungen sein. Ferner kann die Materialdicke auch auf Basis von thermischen Anforderungen bzw. Isoliereigenschaften gewählt werden.

Aufgrund der aneinander anliegenden Leitungen ergibt sich eine doppelt so dicke/starke Isolierschicht zwischen den in den jeweiligen Leitungen transportierten Fluiden. In Anlehnung an obiges Beispiel kann zwischen den Fluiden zweier benachbarter Leitungen ca. 6 mm bis 8 mm (zwei mal 3 mm bis 4 mm) dickes Material vorhanden sein. Dadurch wird eine gute Isoliereigenschaft bewirkt, und der thermische Austausch zwischen den beiden Fluiden stark verringert oder sogar verhindert. Auch dies trägt zu einem geringeren Platzbedarf des Leitungssystems bei (verglichen mit konventionellen Leitungen und Halterungen).

Gemäß einem zweiten Aspekt zum besseren Verständnis der vorliegenden Offenbarung umfasst ein luftförderndes System für ein Flugzeug mindestens ein Leitungssystem gemäß dem ersten Aspekt oder einer oder mehrerer seiner Implementierungsvarianten.

Ferner umfasst das luftfördernde System eine Fördereinrichtung, die dazu eingerichtet ist, Luft in jede der Mehrzahl von Leitungen des Leitungssystems zu fördern. Bei der Fördereinrichtung kann es sich um einen Kompressor, einen Ventilator, eine Pumpe oder ähnliches handeln, die Luft unter Druck setzt und/oder in Bewegung versetzt.

In einer Implementierungsvariante kann das luftfördernde System ferner einen Verteiler umfassen, der dazu eingerichtet ist, die von der Fördereinrichtung geförderte Luft auf die Mehrzahl von Leitungen mit mindestens einem jeweiligen Massestrom zu verteilen. Mit anderen Worten kann der Verteiler von einem Auslass der Fördereinrichtung Luftströme abzweigen, von denen jeder in eine entsprechende Leitung der Mehrzahl von Leitungen geleitet wird.

In einer Implementierungsvariante kann das luftfördernde System alternativ oder zusätzlich eine Temperiervorrichtung umfassen, die dazu eingerichtet ist, die von der Fördereinrichtung geförderte Luft auf mindestens eine vorgegebene Temperatur zu temperieren. Bei der Temperiervorrichtung kann es sich zum Beispiel um einen Luftmischer handeln, der erwärmte Luft mit kühler Luft auf die vorgegebene Temperatur mischt. Selbstverständlich kann es sich bei der Temperiervorrichtung auch um einen Heizer handeln, der die Luft der Fördereinrichtung oder einen Teil der Luft der Fördereinrichtung erwärmt.

Selbstverständlich kann die Fördereinrichtung und Temperiervorrichtung auch in einem Gerät integriert sein.

Lediglich als Beispiel kann die Fördereinrichtung und/oder Temperiervorrichtung eine Flugzeugklimaanlage oder ein Teil davon sein.

In einer Implementierungsvariante kann der Verteiler und/oder die Temperiervorrichtung ferner dazu eingerichtet sein, die Luft in mindestens zwei der Mehrzahl von Leitungen mit einem unterschiedlichen Strömungsparameter zu versehen. Bei den unterschiedlichen Strömungsparametern kann es sich zum Beispiel um einen unterschiedlichen Massestrom und/oder eine unterschiedliche Temperatur der Luft handeln.

Zum Beispiel kann jeder Luftstrom einen gleichgroßen Massestrom aufweisen, eine Gruppe von Leitungen der Mehrzahl von Leitungen einen gleichgroßen Massestrom (aber unterschiedlich zu einem Massestrom einer oder mehrerer anderer Leitungen außerhalb der Gruppe) aufweisen oder jede Leitung der Mehrzahl von Leitungen einen unterschiedlichen Massestrom aufweisen.

Alternativ oder zusätzlich kann jeder Luftstrom in der Mehrzahl von Leitungen die gleiche Temperatur aufweisen, in einer Gruppe von Leitungen der Mehrzahl von Leitungen eine gleich hohe Temperatur (aber unterschiedlich zu einer Temperatur in einer oder mehrerer anderer Leitungen außerhalb der Gruppe) aufweisen oder in jeder Leitung der Mehrzahl von Leitungen eine unterschiedliche Temperatur aufweisen.

Gemäß einem dritten Aspekt zum besseren Verständnis der vorliegenden Offenbarung umfasst ein Flugzeug mindestens ein luftförderndes System gemäß dem zweiten Aspekt oder einer oder mehrerer seiner Implementierungsvarianten.

In einer Implementierungsvariante kann das Leitungssystem des luftfördernden Systems in einem Dreiecksbereich des Flugzeugs angeordnet sein. Bei dem Dreiecksbereich handelt es sich um einen Bereich des Flugzeugs zwischen Kabinenboden, Außenwand und einer vertikalen Strebe (Z-Strebe oder Z-strut), die den Kabinenboden auf einem Rahmen der Flugzeugstruktur abstützt. Der Dreiecksbereich ist somit unterhalb des Kabinenbodens angeordnet und weist üblicherweise keine oder wenige Abschnitte auf, die bereits von anderen Flugzeugkomponenten belegt sind. Dadurch können in Längsrichtung des Flugzeugs über lange Strecken Leitungen in dem Dreiecksbereich verlegt werden.

In einer Implementierungsvariante kann die Halterung des Leitungssystems an dem Kabinenboden, der vertikalen Strebe und/oder der Flugzeugstruktur befestigt werden. Die Anbringung des Leitungssystems in dem Dreiecksbereich ist daher nicht nur einfach, sondern das Leitungssystem ist auch schnell installierbar. Durch die eng aneinander liegenden Leitungen des Leitungssystems nimmt dieses im Querschnitt des Dreiecksbereichs weniger Platz ein als herkömmlich verlegte Leitungen, wodurch zusätzliche Leitungen verlegt werden können. Die Platzersparnis kann bis zu 25 % betragen. Lediglich als Beispiel werden in Flugzeugen immer mehr elektrische Leitungen benötigt, die in dem so gewonnenen Platz verlegt werden können.

Die vorliegende Offenbarung ist nicht auf die Aspekte und Varianten in der hier beschriebenen Reihenfolge beschränkt. Die Beschreibung dieser Aspekte und Varianten ist auch nicht als eine bestimmte einschränkende Gruppierung von Merkmalen zu verstehen. Vielmehr deckt die vorliegende Offenbarung auch Kombinationen von hier beschriebenen Implementierungsvarianten ab.

Nachfolgend wird die vorliegende Offenbarung in Bezug auf beispielhafte Implementierungen beschrieben, die in den Figuren dargestellt sind, wobei
- Figur 1: schematisch ein Leitungssystem für ein Flugzeug darstellt;
- Figur 2: schematisch Leitungssystem für ein Flugzeug mit Verbinder darstellt;
- Figuren 3-4: schematisch Details eines Verbinders in einem Leitungssystem darstellen;
- Figur 5: schematisch einen Querschnitt einer Verbindung zwischen zwei Komponenten des Leitungssystems darstellen;
- Figuren 6-7: schematisch einen Dreiecksbereich eines Flugzeugs mit einem Leitungssystem darstellen;
- Figur 8: schematisch einen Querschnitt eines Flugzeugs mit einem luftfördernden System darstellt; und
- Figur 9: schematisch einen Längsschnitt eines Flugzeugs mit einem luftfördernden System darstellt.

In der nachfolgenden Beschreibung werden bestimmte Details lediglich zum Zweck des Verständnisses der vorliegenden Offenbarung erläutert, jedoch nicht um die vorliegende Offenbarung auf diese Details einzuschränken. Der Fachperson ist eingängig, dass die vorliegende Offenbarung auch in anderen Implementierungsvarianten umgesetzt werden kann, die von diesen bestimmten Details abweichen.

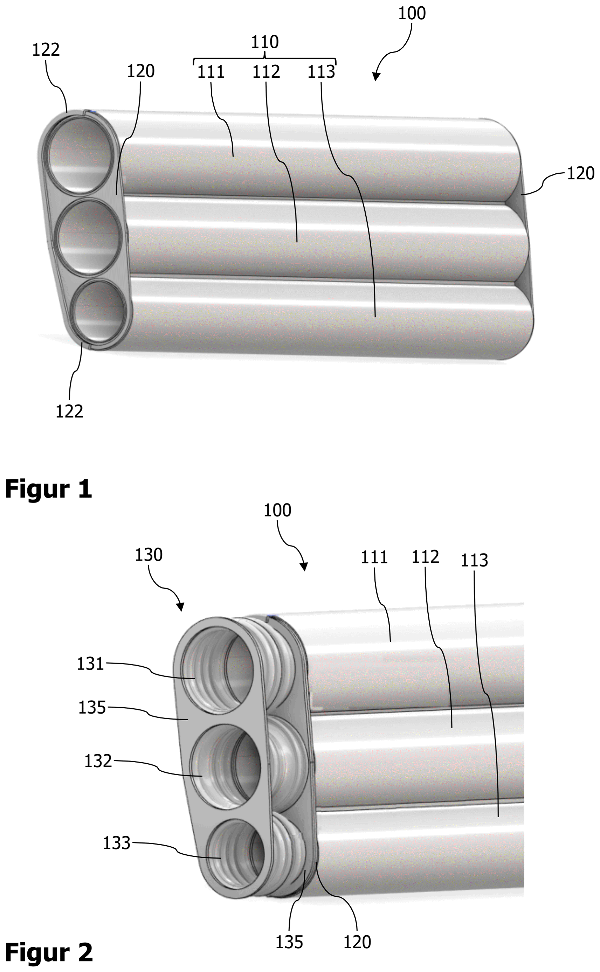

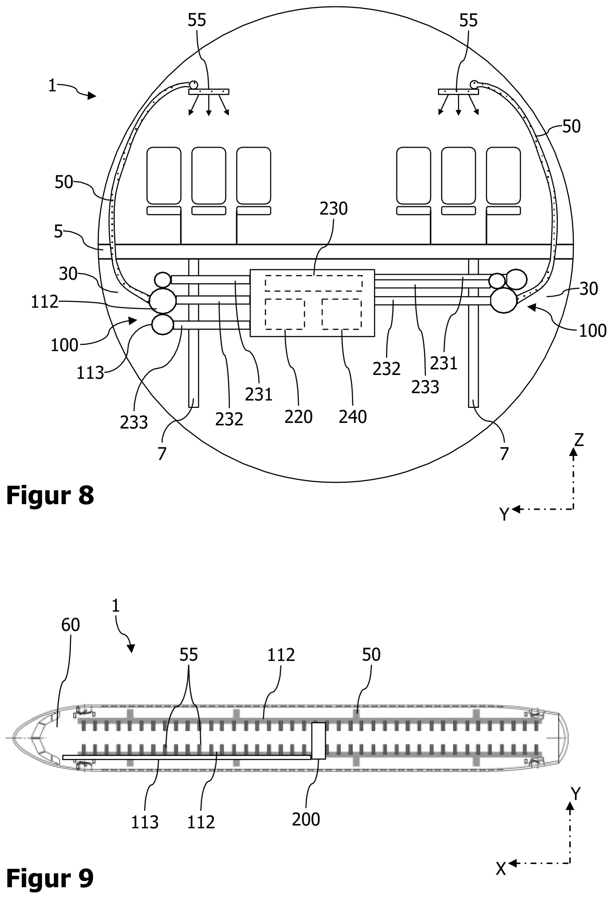

Figur 1 zeigt schematisch ein Leitungssystem 100 für ein luftförderndes System 200 (Figur 8) zur Installation in einem Flugzeug 1 (Figur 9). Das Leitungssystem 100 umfasst eine Mehrzahl von Leitungen 110. In Figur 1 sind drei Leitungen 111, 112, 113 dargestellt, die die Mehrzahl von Leitungen 110 beispielhaft bilden. Das Leitungssystem 100 umfasst ferner eine Stirnplatte 120, die an einem längsseitigen Ende der Mehrzahl von Leitungen 110 angebracht ist. Die Mehrzahl von Leitungen 110 ist mindestens paarweise aneinander anliegend angeordnet. Die Stirnplatte 120 kann dabei eine Verbindung zwischen der Mehrzahl von Leitungen 110 bewirken und die Lage der Leitungen 111-113 fixieren.

Die Stirnplatte 120 ist als scheibenförmiges Bauteil dargestellt, das wie eine Schablone aufgebaut ist. In dem scheibenförmigen Bauteil sind Öffnungen vorgesehen, die den Öffnungen der Leitungen 110 entsprechen. Beispielsweise weisen die Öffnungen in der Stirnplatte 120 jeweils einen Durchmesser auf, der einem jeweiligen Außendurchmesser der Leitungen 110 entspricht. Dadurch kann die Stirnplatte 120 die Leitungen umgreifen und in ihrer Lage zueinander fixieren. Mit anderen Worten bildet die Stirnplatte 120 ein Leitungsbündel oder Leitungspaket. Obwohl hier von Stirnplatte gesprochen wird, kann die Stirnplatte 120 auch als durchgehender oder übergreifender Flansch des Leitungspakets 110 betrachtet werden.

In Figur 1 sind zwei Stirnplatten 120 an den jeweiligen längsseitigen Enden der Leitungen 110 dargestellt. Dadurch können die Leitungen 110 ausschließlich durch die beiden Stirnplatten 120 in ihrer relativen Lage zueinander fixiert werden. Selbstverständlich können auch mehr als zwei Stirnplatten 120 über die Leitungslänge angeordnet sein, um zum Beispiel lange Leitungen 110 stabiler zu halten, wobei es sich genau genommen bei den nicht an den Enden angeordneten Platten nicht um Stirnplatten handelt, sondern um zusätzliche Halteplatten.

Einerseits können die Stirnplatten 120 und/oder Halteplatten (nicht dargestellt) einstückig mit der Mehrzahl von Leitungen hergestellt werden. Zum Beispiel können die Stirnplatten 120 und/oder Halteplatten außen an die Leitungen geklebt oder geschweißt werden oder als ein einzelnes Bauteil hergestellt werden.

Andererseits kann, um den Einbau einer Stirnplatte 120 und/oder Halteplatte in dem Flugzeug 1 zu vereinfachen bzw. um den Einbau der Leitungen 110 in die Stirnplatte 120 und/oder Halteplatte zu vereinfachen, die Stirnplatte 120 und/oder Halteplatte aus mehreren Teilen bestehen. Lediglich als Beispiel kann die Stirnplatte 120 und/oder Halteplatte als zweiteiliges Bauteil ausgebildet sein, wobei ein vorderes klammer- oder kammförmiges Bauteil mit einem hinteren korrespondierenden Bauteil (zum Beispiel auch klammer- oder kammförmig) zusammengeführt wird.

Verbindungspunkte (nicht explizit dargestellt), die zum Beispiel oben und unten an der jeweiligen Stirnplatte 120 und/oder Halteplatte vorgesehen sein können, dienen dem Befestigen des vorderen und hinteren Bauteils aneinander. Lediglich als Beispiel können solche Verbindungspunkte eine Schraubverbindung darstellen. Zum Beispiel kann in dem hinteren Bauteil ein Gewinde oder eine Mutter angeordnet sein, während in dem vorderen Bauteil eine Öffnung vorgesehen ist, durch die eine Schraube geführt werden kann und in das Gewinde bzw. die Mutter eingeschraubt werden kann.

Alternativ kann auch einer der Verbindungspunkte, wie zum Beispiel der untere Verbindungspunkt, ein Gelenk bilden, während der obere Verbindungspunkt eine lösbare Verbindung darstellt. Das Gelenk kann zum Beispiel als Gelenk zwischen den beiden Bauteilen ausgebildet sein oder in Form einer Nut und einer darin eingreifenden Lasche in den jeweiligen Bauteilen ausgebildet sein. Die lösbare Verbindung wiederum kann eine Schraubverbindung sein, oder mittels einer Lasche, wie zum Beispiel einem Spannverschluss, implementiert sein.

Eine andere beispielhafte Stirnplatte 120 und/oder Halteplatte könnte aus dem hinteren klammer- oder kammförmigen Bauteil und einem Gurt bestehen, der zwischen zwei oben bzw. unten liegenden Verbindungspunkten gespannt wird.

Die Mehrzahl von Leitungen 110 lässt sich somit in die Stirnplatte 120 und/oder Halteplatte einsetzen und durch das vordere Bauteil oder den Gurt befestigen. Alternativ kann, wie oben dargelegt, die Stirnplatte 120 und/oder Halteplatte auch einstückig mit den Leitungen 110 hergestellt werden, sodass das gesamte Leistungspaket in das Flugzeug 1 gebracht und dort installiert werden kann.

Jede der Mehrzahl von Leitungen 110 ist aus einem isolierenden Material hergestellt. Zum Beispiel kann das Material Hohlräume aufweisen, einen Schaum umfassen oder ähnlich isolierend aufgebaut sein. Diese Hohlräume sind Gaseinschlüsse in dem Material, wodurch eine thermische Isolierung bewirkt wird. Lediglich als Beispiel können die Hohlräume in Form von Waben (Bienenwaben) vorliegen und entsprechend angeordnet sein. Mit anderen Worten kann das Material eine wabenförmige Struktur aufweisen. Die Ausrichtung der Waben kann dabei in Radialrichtung aber auch in Längsrichtung erfolgen.

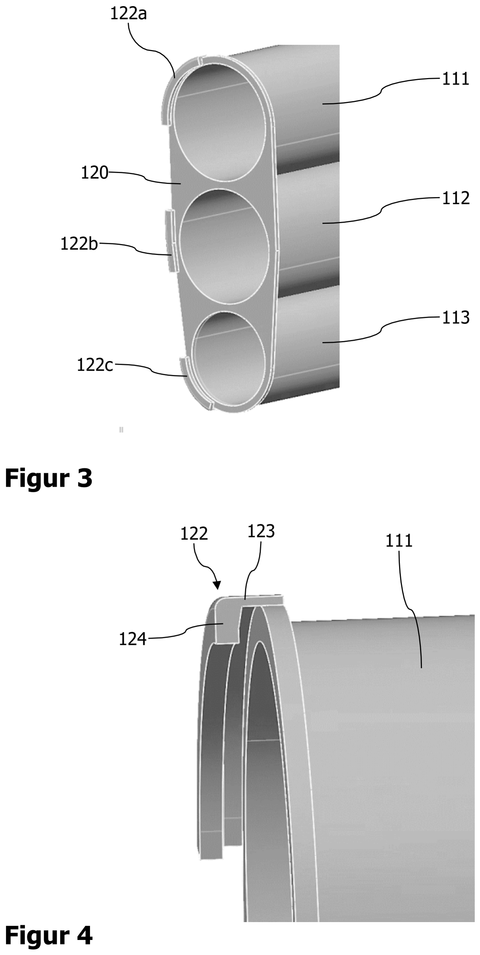

Wieder mit Bezug auf Figur 1 kann die Stirnplatte 120 mindestens einen Verbinder 122 umfassen, der dazu eingerichtet ist, eine weitere Stirnplatte aufzunehmen. Zum Beispiel kann der Verbinder dazu eingerichtet sein, die weitere Stirnplatte formschlüssig und/oder kraftschlüssig zu halten. Dies wird im Detail mit Bezug auf die Figuren 3 bis 5 näher beschrieben.

Figur 2 zeigt schematisch ein Detail eines Leitungssystems 100 für ein Flugzeug 1. An einem Ende der Mehrzahl von Leitungen 110 kann eine Kopplungseinrichtung 130 vorgesehen sein, die dazu eingerichtet ist, die Mehrzahl von Leitungen 110 mit einer korrespondierenden Mehrzahl von Leitungen (in Figur 2 nicht dargestellt) zu verbinden. Bei der korrespondierenden Mehrzahl von Leitungen kann es sich um das gleiche Leitungssystem 100 handeln, wie es in der Figur 1 oder auch Figur 2 dargestellt ist. Die Mehrzahl von Leitungen 110 lässt sich somit in Längsrichtung des Flugzeugs 1 beliebig verlängern.

In der Kopplungseinrichtung 130 sind Rohrstücke 131, 132, 133 vorgesehen, die an einem längsseitigen Ende der Mehrzahl von Leitungen 110 angeordnet werden, wobei jeweils ein Rohrstück 131, 132, 133 mit einer Leitung 111, 112, 113 der Mehrzahl von Leitungen 110 verbunden wird. Dabei wird eine fluiddichte Verbindung geschaffen. Lediglich beispielhaft können die Rohrstücke 131, 132, 133 in die jeweilige Leitung 111, 112, 113 hineinragen. Alternativ kann die jeweilige Leitung 111, 112, 113 in ein entsprechendes Rohrstück 131, 132, 133 eingeführt werden. Eine fluidischen Abdichtung kann dabei durch Formschluss und/oder Kraftschluss erfolgen. Alternativ oder zusätzlich kann auch eine andere fluiddichte Verbindung zwischen Rohrstück 131, 132, 133 und entsprechender Leitung 111, 112, 113 bewirkt werden (zum Beispiel durch Verkleben, Schweißen, eine Rohrschelle, etc.).

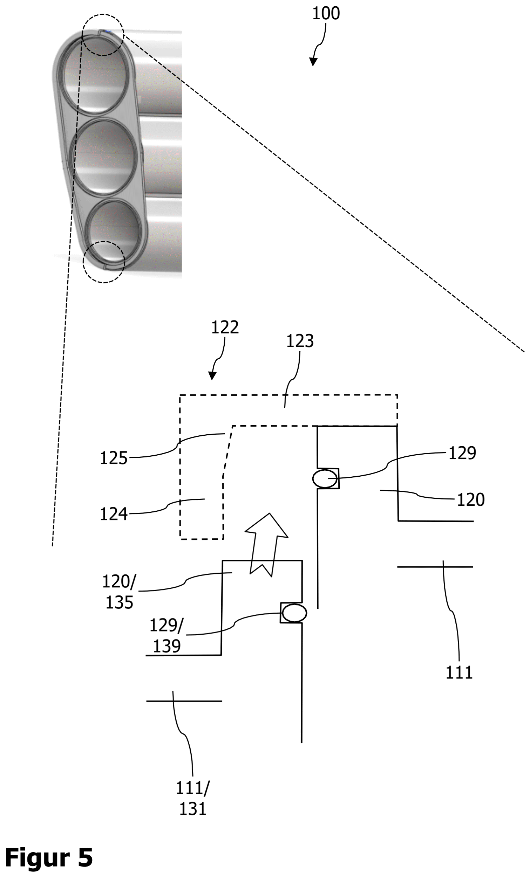

Eine bevorzugte Abdichtung kann auch in Form einer Flanschabdichtung erfolgen, wie sie in Figur 5 näher beschrieben ist.

Wieder mit Bezug auf Figur 2, weist die Kopplungseinrichtung 130 mindestens eine weitere Stirnplatte 135 auf. In dem dargestellten Beispiel weist die Kopplungseinrichtung 130 jeweils eine Stirnplatte 135 an den längsseitigen Enden der Rohrstücke 131, 132, 133 auf. Die Stirnplatte 135 der Kopplungseinrichtung 130 kann zum Beispiel die gleiche Form aufweisen, wie die Stirnplatte 120 der Mehrzahl von Leitungen 110. Die beiden Stirnplatten 135, 120 können aufeinanderliegend (deckungsgleich) angeordnet werden, wobei die Stirnplatte 135 der Kopplungseinrichtung 130 durch den Verbinder 122 gehalten wird.

Figur 2 zeigt ferner die Kopplungseinrichtung 130 mit zwei Stirnplatten 135 an den beiden längsseitigen Enden. Diese Kopplungseinrichtung 130 kann somit zwischen zwei Stirnplatten 120 mit einer zugehörigen Mehrzahl von Leitungen 110 angeordnet und befestigt werden.

Lediglich als Beispiel kann die in Figur 1 links dargestellte Stirnplatte 120 sowie die in Figur 1 rechts dargestellte Stirnplatte 120 jeweils einen Verbinder 122 aufweisen. Dadurch kann die in Figur 2 dargestellte Kopplungseinrichtung 130 mit entsprechenden Leitungspaketen auf beiden Seiten verbunden werden, die beiden Leistungspakete also miteinander verbinden.

Alternativ kann die in Figur 1 rechts dargestellte Stirnplatte 120 keinen Verbinder aufweisen. Somit kann die rechts dargestellte Stirnplatte mit dem Verbinder 122 der links dargestellten Stirnplatte 120 verbunden werden und somit zwei Leistungspakete 110 direkt miteinander gekoppelt werden.

Ebenfalls alternativ kann auch die in Figur 2 links dargestellte Stirnplatte 135 der Kopplungseinrichtung 130 einen Verbinder 122 umfassen, der in Figur 2 nicht dargestellt ist, aber entsprechend der Figur 1 sowie Figuren 3 bis 5 aufgebaut ist. Dies ermöglicht die Verbindung mit einem Leitungspaket, genauer gesagt dessen Stirnplatte 120, die keinen Verbinder 122 aufweist.

Figur 3 zeigt schematisch Details eines Verbinders 122 in einem Leitungssystem 100. Der an der Stirnplatte 120 vorgesehene Verbinder 122 ist mehrteilig ausgestaltet. Mit anderen Worten ist der mindestens eine Verbinder 122 in Form von hier beispielhaft drei Verbindern 122a, 122b, 122c implementiert. Im Vergleich zu dem Verbinder 122 in Figur 1, der durchgängig von einem oberen Bereich der Stirnplatte 120 zu einem unteren Bereich der Stirnplatte 120 vorgesehen ist, ist der mehrteilige Verbinder 122a,b,c in Figur 3 materialsparender.

In beiden Fällen (Figur 1 sowie Figur 3) ist der Verbinder 122 mindestens abschnittsweise an einer Außenkante der Stirnplatte 120 angeordnet.

Mit Bezug auf die Figur 4, die eine vergrößerte Ansicht des Verbinders 122a aus Figur 3 zeigt, kann zum Beispiel jeder Verbinder einen ersten Teil 123, der sich von der Stirnplatte 120 aus weg erstreckt, sowie einen zweiten Teil 124, der sich von dem ersten Teil erstreckt, aufweisen. Der erste Teil 123 kann sich zum Beispiel von einem äußeren Rand (Umfang) der Stirnplatte 120 aus erstrecken und parallel zu den Leitungen 110 (in Figur 4 ist nur die Leitung 111 teilweise dargestellt) verlaufen. Der zweite Teil 124 kann zum Beispiel parallel zu und beabstandet von der Stirnplatte 120 der Mehrzahl von Leitungen 110 angeordnet sein.

In Figur 5, die einen Querschnitt durch solch einen Verbinder 122 zeigt, wird die Funktionsweise des Verbinders 122 näher erläutert. Der Verbinder 122 ist gestrichelt dargestellt, da er nicht an jedem Abschnitt der Außenkante der Stirnplatte 120 vorgesehen ist, wie dies den Figuren 1, 3 und 4 entnommen werden kann. Mit anderen Worten kann die Stirnplatte 120 in manchen Abschnitten lediglich einen freien Flansch zu den Leitungen 110 darstellen.

Auf jeden Fall lässt sich eine weitere Stirnplatte 120, 135 zwischen dem zweiten Teil 124 des Verbinders 122 und der Stirnplatte 120 der Mehrzahl von Leitungen 110 einsetzen (die hierbei durchgeführte Bewegung der weiteren Stirnplatte 120, 135 ist durch den Pfeil verdeutlicht). Der erste Teil 123 des Verbinders 122 kann dabei als Anschlag für die weitere Stirnplatte 120, 135 dienen. Der Abstand zwischen dem zweiten Teil 124 des Verbinders 122 und der Stirnplatte 120 kann so gewählt sein, dass er ungefähr der Dicke der weiteren Stirnplatte 120, 135 entspricht (zum Beispiel gleich wie oder kleiner als die Dicke der weiteren Stirnplatte 120, 135 ist). Dadurch lässt sich die weitere Stirnplatte 120, 135 in den Verbinder 122 einführen, genauer gesagt zwischen den zweiten Teil 124 des Verbinders 122 und der Stirnplatte 120 anordnen und formschlüssig und/oder kraftschlüssig dort halten.

Figur 5 zeigt beispielhaft, dass der zweite Teil 124 des Verbinders 122 eine Verdickung 125 aufweisen kann, durch die ein Abstand zwischen dem zweiten Teil 124 des Verbinders 122 und der Stirnplatte 120 geringer ist als in einem Bereich des zweiten Teils 124 des Verbinders 122 ohne die Verdickung 125. Durch die Verdickung 125 kann der Abstand kleiner werden als die Dicke der weiteren Stirnplatte120, 135, sodass die weitere Stirnplatte 120, 135 durch die Verdickung 125 eingeklemmt wird (d.h., kraftschlüssig gehalten wird).

Bei der weiteren Stirnplatte 120, 135 kann es sich zum Beispiel um die weitere Stirnplatte 135 der Kopplungseinrichtung 130 handeln. Somit kann die Kopplungseinrichtung 130 in einfacher Weise an der Stirnplatte 120 der Mehrzahl von Leitungen 110 befestigt werden. Ebenso ist es denkbar, ohne Kopplungseinrichtung 130 ein weiteres Leitungspaket (weitere Mehrzahl von Leitungen 110) mit einer dazugehörigen Stirnplatte 120 mit dem Verbinder 120 an der Stirnplatte des (vorherigen) Leitungspakets zu verbinden und somit zwei Leitungspakete miteinander zu koppeln.

Figur 5 zeigt ferner jeweils eine Dichtung 129, 139 in der Stirnplatte 120 bzw. der weiteren Stirnplatte 120, 135. Diese Dichtung 129, 139 ist quasi an einem Flansch außerhalb der Leitung 111 bzw. des Rohrstücks 131 angeordnet, sodass der Innenquerschnitt der jeweiligen Leitung 111 bzw. des Rohrstücks 131 frei bleibt und ungestört ist. Es handelt sich somit um eine Flanschabdichtung. Um die Fluide der einzelnen Leitungen 110 voneinander zu trennen, kann jede Öffnung in der Stirnplatte 120 bzw. der weiteren Stirnplatte 120, 135 von einer zugehörigen Dichtung 129, 139 umgeben werden. In den dargestellten Beispielen mit drei Leitungen 111, 112, 113 werden somit drei Dichtungen 129, 139 vorgesehen.

Lediglich beispielhaft kann die Dichtung 129, 139 in einer zugehörigen Nut angeordnet sein, wobei die Nut um eine Öffnung in der Stirnplatte 120, 135 zugehörig zu der Leitung 111 bzw. dem Rohrstück 131 herum verläuft.

Selbstverständlich kann auch nur die Stirnplatte 120 oder nur die weitere Stirnplatte 120, 135 eine Dichtung 129 aufweisen, die auf der gegenüberliegenden (weiteren) Stirnplatte 120, 135, die dann eine glatte Oberfläche aufweist, anliegt und somit eine Dichtwirkung erzielt.

Mit Bezug auf die Figuren 1 und 3 können zwei Enden des mindestens einen Verbinders 122 in einem Abstand voneinander angeordnet sein, der kleiner ist als eine maximale Ausdehnung der weiteren Stirnplatte 120, 135. Zum Beispiel sind bei einem einzelnen Verbinder 122, wie er in Figur 1 gezeigt ist, nur zwei Enden vorhanden. Deren Abstand zueinander ist kleiner als die maximale Ausdehnung der weiteren Stirnplatte 120, 135. Die beiden Enden des Verbinders 122 bilden somit eine Öffnung, in die die weitere Stirnplatte 120, 135 eingeführt werden kann. Aufgrund des kleineren Abstands kann sich der Verbinder 122 zum Beispiel elastisch verformen, um die Stirnplatte 120, 135 einzuführen. Ferner verhindert der kleinere Abstand zwischen den beiden Enden des Verbinders 122, dass sich die weitere Stirnplatte 120, 135 von der Stirnplatte 120 der Mehrzahl von Leitungen 110 löst (mit anderen Worten, dass sie nicht herausfällt).

Im Fall eines Verbinders, der aus mehreren Abschnitten besteht, wie er in Figur 3 gezeigt ist, sind unter den zwei Enden des mindestens einen Verbinders 122 jeweils ein Ende eines der mehreren Abschnitte gemeint, die am weitesten voneinander entfernt liegen; hier zum Beispiel das obere Ende des Abschnitts 122a sowie das untere Ende des Abschnitts 122c. Diese beiden Enden bilden somit die oben beschriebene Öffnung zum Einführen und Halten der weiteren Stirnplatte 120, 135.

Selbstverständlich können die beiden Stirnplatten 120, 135 neben dem Verbinder 122 auch zusätzlich befestigt werden. So kann entsprechend dem Verbinder 122 ein zusätzlicher Verbinder (nicht dargestellt) über die Außenkanten der aufeinanderliegenden Stirnplatten 120, 135 gestülpt werden. Dieser zusätzliche Verbinder kann zum Beispiel einen U-förmigen Querschnitt aufweisen und durch Klemmwirkung auf den Außenkanten befestigt werden. Eine weitere oder zusätzlichen Möglichkeit ist das Verkleben und/oder Verschweißen und/oder Verschrauben der beiden aufeinander liegenden Stirnplatten 120, 135.

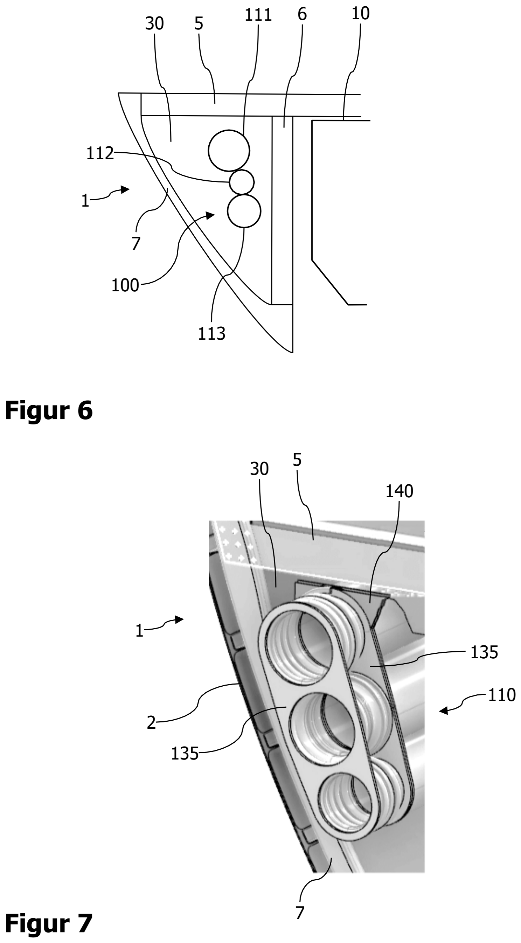

Die Figuren 6 und 7 zeigen schematisch einen Dreiecksbereich 30 eines Flugzeugs 1 mit einem Leitungssystem 100. Der Dreiecksbereich 30 ist unterhalb eines Kabinenbodens 5 und neben der Außenhaut 2 des Flugzeugs 1 angeordnet und wird üblicherweise durch den Kabinenboden 5, eine Vertikalstrebe 6 (auch Z-Strebe oder Z-strut genannt), und einen Rahmen 7 des Flugzeugs 1 gebildet. Die Vertikalstrebe 6 stützt einerseits den Kabinenboden 5 auf dem Rahmen 7 ab, und begrenzt andererseits einen Gepäck- oder Cargobereich des Flugzeugs 1. In Figur 3 ist zur Veranschaulichung beispielhaft ein Teil eines Flugzeugs-Containers 10 dargestellt. Der Dreiecksbereich 30 erstreckt sich üblicherweise entlang der Längsrichtung des Flugzeugs 1, wobei (nahezu) keine Komponenten in diesem Bereich angeordnet sind, sodass längserstreckende Bauteile, wie zum Beispiel Leitungen, hier gut verlegt werden können.

Üblicherweise werden Leitungen an einem Strukturbauteil 5, 6, 7, das den Dreiecksbereich 30 bildet, befestigt. Gemäß der vorliegenden Offenbarung kann ein Leitungssystem 100 in den Dreiecksbereich 30 in kompakter und einfacher Weise angeordnet und befestigt werden.

Mit Bezug auf die Figuren 6 und 7 kann das Leitungssystem 100 eine Halterung 140 umfassen, die dazu eingerichtet ist, die Stirnplatte 120 und/oder die Kopplungseinrichtung 130 zu halten. In Figur 7 ist die Halterung 140 beispielhaft so dargestellt, dass sie an der Stirnplatte 120 befestigt ist oder in die Stirnplatte 120 integriert ist (also einen Teil des Verbinders 120 bildet). Dies ist jedoch nur als eine Ausgestaltungsvariante zu verstehen. Die Halterung 140 ist beispielsweise an dem Kabinenboden 5 befestigt, wie zum Beispiel einem Querträger des Kabinenbodens 5, wie in Figur 7 dargestellt.

Wie der Figur 6 entnommen werden kann, kann die Mehrzahl der Leitungen 110 entlang einer Linie (hier bogenförmig) angeordnet werden. Dabei berühren sich immer zwei der Leitungen 111, 112, 113 paarweise. Dieses Leitungsbündel oder Leitungspaket kann irgendwo innerhalb des Querschnitts des Dreiecksbereichs 30 angebracht werden.

Wie der Figur 7 entnommen werden kann, kann die Halterung 140 zusammen mit der Stirnplatte 120 (und/oder zusammen mit der Kopplungseinrichtung 130) so geformt sein, dass das Leitungssystem 100 nahe der Außenhaut 2 angeordnet werden kann. In diesem Bereich ist das Anbringen von Leitungen üblicherweise eher schwierig, da er am weitesten von dem Gepäckbereich des Flugzeugs 1 entfernt ist und sich somit ergonomisch schwierige Positionen für einen Werker ergeben. Jedoch könnte die Halterung 140 an dem Kabinenboden 5 (und/oder an dem Rahmen 7) angebracht werden, bevor die Vertikalstrebe 6 eingebaut wird. Die Leitungen 110 können dann an der Halterung 140 befestigt werden oder (bei integrierter Halterung 140) zusammen an dem Kabinenboden 5 und/oder dem Rahmen 7 befestigt werden. Der Raum zwischen den Leitungen 110 und der Vertikalstrebe 6, der leichter zugänglich ist, ist somit frei für weitere Leitungen.

Figur 8 zeigt schematisch einen Querschnitt eines Flugzeugs 1 mit einem luftfördernden System 200. Das luftfördernde System 200 kann zum Beispiel eine Flugzeugklimaanlage oder ein Teil davon sein, die ebenfalls unterhalb des Kabinenbodens 5 angeordnet ist. Das luftfördernde System 200 umfasst eine Fördereinrichtung 220, die dazu eingerichtet ist, Luft in jede der Mehrzahl von Leitungen 110 des Leitungssystems 100 zu fördern. Hierfür können beispielsweise Zuleitungen 231, 232, 233 vorgesehen sein, die das luftfördernde System 200 mit den im Dreiecksbereich 30 angeordneten Leitungen 111, 112, 113 verbindet.

Das luftfördernde System 200 kann ferner einen Verteiler 230 umfassen, der dazu eingerichtet ist, die von der Fördereinrichtung 220 geförderte Luft auf die Mehrzahl von Leitungen 110 mit mindestens einem jeweiligen Massestrom zu verteilen. Alternativ oder zusätzlich kann das luftfördernde System 200 eine Temperiervorrichtung 240 umfassen, die dazu eingerichtet ist, die von der Fördereinrichtung 220 geförderte Luft auf mindestens eine vorgegebene Temperatur zu temperieren.

Figur 8 zeigt ferner schematisch Steigleitungen 50, die von dem Dreiecksbereich 30 in den Kabinenbereich führen, zum Beispiel zu einer Auslassdüse 55 oberhalb von Passagiersitzen. Entlang der Längsrichtung des Flugzeugs 1 können in bestimmten Abständen mehrere solcher Steigleitungen 50 vorgesehen sein, die an eine gemeinsame Leitung 112 angeschlossen sind. Die Leitung 112 dient somit als Verteilleitung entlang der Längsrichtung des Flugzeugs 1.

Figur 9 zeigt schematisch einen Längsschnitt eines Flugzeugs 1 mit einem luftfördernden System 200. Wie durch die Figuren 8 und 9 gezeigt ist, kann die Mehrzahl von Leitungen 110 Luft des luftfördernden Systems 200 zu verschiedenen Orten innerhalb des Flugzeugs 1 leiten. Lediglich beispielhaft zeigt die Figur 9, dass die Leitung 113 Luft von dem luftfördernden System 200 in das Cockpit 60 des Flugzeugs 1 leitet. Die in Figur 8 weiterhin dargestellte Leitung 111 kann zum Beispiel Luft von dem luftfördernden System 200 in einen weiteren zu belüftenden Bereich leiten, wie zum Beispiel den Gepäckbereich, eine Hauptgalley, einen anderen Abschnitt der Passagierkabine, etc..

Die Luft in den Leitungen 111, 112, 113 kann somit unterschiedliche Strömungsparameter aufweisen. Die unterschiedlichen Strömungsparameter können in jeder der Leitungen 110 vorliegen oder in mehreren der Leitungen 110 liegen gleiche Strömungsparameter vor, während in anderen Leitungen 110 andere Strömungsparameter vorliegen. Lediglich als Beispiel kann der Massestrom in der Leitung 113 zu dem Cockpit 60 geringer sein als in der Leitung 112, die die Passagierkabine mit Frischluft zu versorgen hat. Auch kann die Temperatur in der Leitung 113 höher sein, als in der Leitung 112, da die Passagierkabine eine höhere Kühlleistung erfordert als das Cockpit 60.

Wie der Figur 8 weiterhin entnommen werden kann, kann die Mehrzahl von Leitungen 110 sowohl entlang einer Linie angeordnet sein, als auch in Form eines Bündels (hier auf einem Dreieck) angeordnet werden. Das Leitungssystem 100 der vorliegenden Offenbarung ist in der Anordnung der Leitungen 110 (insbesondere in Querschnittsrichtung betrachtet) frei und kann an die Gegebenheiten in dem Dreiecksbereich 30 angepasst werden.

## Patentansprüche

1. Leitungssystem (100) für ein luftförderndes System (200) zur Installation in einem Flugzeug (1), wobei das Leitungssystem umfasst:
eine Mehrzahl von Leitungen (110), die parallel zueinander und mindestens paarweise aneinander anliegend angeordnet sind; und
eine Stirnplatte (120), die an einem längsseitigen Ende der Mehrzahl von Leitungen angebracht ist,
wobei jede der Mehrzahl von Leitungen (110) aus einem biegesteifen, isolierenden Material hergestellt ist.

2. Leitungssystem (100) gemäß Anspruch 1, wobei die Stirnplatte (120) mindestens einen Verbinder (122) umfasst, der dazu eingerichtet ist, eine weitere Stirnplatte (120, 135) aufzunehmen, wobei vorzugsweise der Verbinder (122) ferner dazu eingerichtet ist, die weitere Stirnplatte (120, 135) formschlüssig und/oder kraftschlüssig zu halten.

3. Leitungssystem (100) gemäß Anspruch 2, wobei der mindestens eine Verbinder (122) mindestens abschnittsweise an einer Außenkante der Stirnplatte (120) angeordnet ist.

4. Leitungssystem (100) gemäß Anspruch 3, wobei zwei Enden des mindestens einen Verbinders (122) in einem Abstand voneinander angeordnet sind, der kleiner ist als eine maximale Ausdehnung der weiteren Stirnplatte (120, 135).

5. Leitungssystem (100) gemäß einem der Ansprüche 1 bis 4, ferner umfassend:
eine Kopplungseinrichtung (130), die dazu eingerichtet ist, die Mehrzahl von Leitungen (110) mit einer korrespondierenden Mehrzahl von Leitungen (110) zu verbinden.

6. Leitungssystem (100) gemäß Anspruch 5, wenn dieser von Anspruch 2 abhängig ist, wobei die Kopplungseinrichtung (130) eine Stirnplatte (135) umfasst, die in dem mindestens einen Verbinder (122) aufgenommen ist.

7. Leitungssystem (100) gemäß einem der Ansprüche 1 bis 6, ferner umfassend:
eine Halterung (140), die dazu eingerichtet ist, die Stirnplatte (120) und/oder die Kopplungseinrichtung (130) zu halten,
wobei vorzugsweise die Halterung (140) ferner dazu eingerichtet ist, an einem Strukturbauteil des Flugzeugs (1) befestigt zu werden.

8. Leitungssystem (100) gemäß einem der Ansprüche 1 bis 7, wobei die mindestens paarweise aneinander anliegend angeordneten Leitungen (110) aneinander befestigt sind, vorzugsweise aneinander geklebt oder miteinander verschweißt sind.

9. Luftförderndes System (200) für ein Flugzeug (1), wobei das luftfördernde System umfasst:
ein Leitungssystem (100) gemäß einem der Ansprüche 1 bis 8; und
eine Fördereinrichtung (220), die dazu eingerichtet ist, Luft in jede der Mehrzahl von Leitungen (110) des Leitungssystems (100) zu fördern.

10. Luftförderndes System (200) gemäß Anspruch 9, ferner umfassend:
einen Verteiler (230), der dazu eingerichtet ist, die von der Fördereinrichtung (220) geförderte Luft auf die Mehrzahl von Leitungen (110) mit mindestens einem jeweiligen Massestrom zu verteilen, und/oder
eine Temperiervorrichtung (240), die dazu eingerichtet ist, die von der Fördereinrichtung (220) geförderte Luft auf mindestens eine vorgegebene Temperatur zu temperieren.

11. Luftförderndes System (200) gemäß Anspruch 10, wobei der Verteiler (230) und/oder die Temperiervorrichtung (240) ferner dazu eingerichtet ist, die Luft in mindestens zwei der Mehrzahl von Leitungen (110) mit einem unterschiedlichen Strömungsparameter zu versehen,
wobei vorzugsweise der unterschiedliche Strömungsparameter ein unterschiedlicher Massestrom und/oder eine unterschiedliche Temperatur der Luft ist.

12. Flugzeug (1), umfassend:
mindestens ein luftförderndes System (200) gemäß einem der Ansprüche 9 bis 11.

13. Flugzeug (1) gemäß Anspruch 12, wobei das Leitungssystem (100) des luftfördernden Systems (200) in einem Dreiecksbereich (50) des Flugzeugs (1) angeordnet ist.
